(19) Europäisches Patentamt
European Patent Office
Office européen des brevets

(11) Veröffentlichungsnummer: **0 197 419**
**A2**

(12) # EUROPÄISCHE PATENTANMELDUNG

(21) Anmeldenummer: **86104043.4**

(51) Int. Cl.⁴: **C09J 3/14**, C08F 220/00

(22) Anmeldetag: **24.03.86**

(30) Priorität: **06.04.85 DE 3512625**

(43) Veröffentlichungstag der Anmeldung:
**15.10.86 Patentblatt 86/42**

(84) Benannte Vertragsstaaten:
**DE FR GB IT SE**

(71) Anmelder: **BAYER AG**
**Konzernverwaltung RP Patentabteilung**
**D-5090 Leverkusen 1 Bayerwerk(DE)**

(72) Erfinder: **Fischer, Wolfgang, Dr.**
**Breslauerstrasse 15**
**D-4005 Meerbusch 3(DE)**
Erfinder: **Kniege, Wilfried**
**Alte Wipperfürther Strasse 80**
**D-5060 Bergisch-Gladbach(DE)**

(54) **Klebstoffe, die Acrylsäurederivate des 5,6-Dihydro-di-cyclopentadienols enthalten.**

(57) Die Erfindung betrifft Klebstoffe, die Acrylsäurederivate des 5,6-Dihydrodicyclopentadienols enthalten. Diese Klebstoffe gehören zur Klasse der radikalisch härtenden Klebstoffe.



Rank Xerox

Klebstoffe, die Acrylsäurederivate des 5,6-Dihdyro-dicyclopentadienols enthalten

Die Erfindung betrifft Klebstoffe, die Acrylsäurederivate des 5,6-Dihydrodicyclopentadienols enthalten.

Diese Klebstoffe gehören zur Klasse der radikalisch härtenden Klebstoffe.

Radikalisch härtende Klebstoffe sind bekanntlich Gemische aus mehreren Stoffen. Sie bestehen z.B. aus:

(a) Monomeren mit einer polymerisierbaren Gruppe (Reaktivverdünner),

(b) Monomeren mit mehreren polymerisierbaren Gruppen (Vernetzer),

(c) Polymeren Bestandteilen (Verdicker, Elastifikator),

(d) Adhäsionsverbesserern

und gegebenenfalls weiteren Zusätzen, z.B. Füllstoffen, Netzmitteln, Stabilisatoren, Chelatbildnern etc.

Zur Härtung dieser Mischungen gibt es verschiedene Möglichkeiten, z.B.

1) Als Einkomponentenklebstoff durch Zumischen eines organischen Peroxids und Härtung bei erhöhter Temperatur.

2) Als Einkomponentenklebstoff durch Zumischen eines organischen Peroxides, vorzugsweise eines organischen Hydroperoxides und geeigneten Beschleunigern. Die Härtung erfolgt dann unter aneroben Bedingungen bei Raumtemperatur.

3). Als Zweikomponentenklebstoff

A) wobei eine Komponente 1 durch Zugabe eines organischen Peroxides und gegebenenfalls von Co-Katalysatoren zu einer Monomer-Polymer-Mischung hergestellt wird und die andere Komponente 2 als Beschleuniger Verbindungen enthält, die mit Peroxiden bei Raumtemperatur eine Polymerisation initiieren können.

Die Anwendung eines 2-komponentigen Klebstoffs kann im allgemeinen auf zwei verschiedenen Arten erfolgen: Komponente 1 wird mit Komponente 2 vermischt und danach erfolgt die Klebung. Die Aushärtung erfolgt bei Raumtemperatur. Nachteilig kann sein, daß die Mischung aus beiden Komponenten nur eine eng begrenzte Topfzeit hat.

Demgegenüber bietet eine Verklebung nach der zweiten Methode, der sogenannten no-mix-Methode Vorteile: Auf je eines der zu verklebenden Teile wird eine Komponente aufgetragen, erst danach werden die Teile zusammengefügt. Der Klebstoff härtet dann bei Raumtemperatur aus. Von erheblichem Vorteil ist hier außerdem, daß die mit den Klebstoffkomponenten bzw. Aktivatoren separat vorbehandelten Fügeteile vor der eingentlichen Verklebung zwischengelagert werden können.

4) Als Zweikomponentenklebstoff

B) Hierbei kann Komponente 1 identisch sein mit der unter 3 beschriebenen Komponente 1 der Formulierung (A). Komponente 2 kann so hergestellt werden, daß der Monomer-Polymer-Mischung eine Substanz zugegeben wird, die bei Raumtemperatur mit organischen Peroxiden eine Polymerisation initiieren kann. Es ist auch möglich, die mit organischen Peroxiden zu Radikalen reagierende Substanz und einzelne Bestandteile der Polymer-Monomer-Mischung zur Formulierung von Komponente 2 zu kombinieren, wobei die 2. Komponente fließfähig sein sollte. Die Verarbeitung dieses 2-Komponenten-Reaktionsklebstoffs kann wie unter Punkt 3) beschrieben, erfolgen.

Einkomponentige Reaktionsklebstoffe, wie unter 2) beschrieben, finden überwiegend als flüssige Dichtungsmaterialien und als Schraubensicherung Verwendung. Zweikomponentige Reaktionsklebstoffe, wie unter 3) und 4) beschrieben, werden verwendet als Konstruktionsklebstoffe. Bekannt sind solche Klebstoffe auf Acrylatbasis unter den Bezeichnungen "Acrlatklebstoffe der 2. Generation" (2nd generation acrylic adhesives, SGA), "toughened acrylics", "aerobe Acrylatklebstoffe" etc.

Ein Vorteil dieser Klebstoffe ist es, die einzelnen Komponenten wie Reaktivverdünner, Vernetzer, Polymeranteil und Adhäsionsverbesserer den speziellen Erfordernissen diverser Klebeprobleme anpassen zu können. Eine wichtige Aufgabe kann dabei der Reaktivverdünner haben. Er sollte es ermöglichen, die für die Anforderungen der Verklebung günstigen Stoffe zu kombinieren, d.h. er sollte es ermöglichen, die beschriebenen Bestandteile eines Klebstoffs zu einer homogenen, stabilen Masse oder Lösung zu verarbeiten. Er soll höhermolekulare Anteile des Klebstoffs verdünnen und dem Klebstoff seine zur Applikation notwendige Viskosität verleihen. Beim Härtungsvorgang soll er ein Bestandteil des gehärteten Klebstoffs werden.

Weitere Anforderungen an Reaktivverdünner sind z.B. bei niedriger Viskosität geringer Dampfdruck und geringe Flüchtigkeit. Sie sollten außerdem die Adhäsion des Klebstoffs an Fügeteile vergrößern und den Schrumpf während des Polymerisationsvorgangs möglichst verrringern.

Überwiegend werden als Reaktivverdünner nach wie vor Mono(meth)acrylate aliphatischer $C_1$-$C_8$-Alkohole verwendet. Diese können einen hohen Dampfdruck aufweisen. Als Folge z.B. können behandelte Fügeteile, die nach dem no mix-Verfahren verklebt werden sollen, nur sehr kurz offen gelagert werden. Weiterhin können die Polymerisate solcher Monomerer sehr weich sein, was die Eigenschaften der Klebestelle ungünstig beeinflußen kann.

Aus der US-PS 3 642 750 sind für anerob härtende Klebstoff-oder Dichtungsmassen die Ester der Acryl-oder Methacrylsäure des 5,6-Dihydrodicyclopentadienols bekannt. Jedoch haben diese Verbindungen einen unangenehmen Geruch und bilden harte, spröde und damit sehr brüchige Klebeverbindungen.

Aus EP-A-0 008 202 sind anerob härtende Klebstoff-und Dichtungsmassen bekannt, die 5,6-Dihydrodicyclopentadineyloxyalkyl(meth)acrylate enthalten. Auch diese Reaktivverdünner von Ester-Ether-Typ verspröden bei oder nach der Härtung bei Verklebungen.

Es wurde nun gefunden, daß Klebstoffe, die Acryloylderivaten des 5,6-Dihydrodicyclopentadienols enthalten, die geforderten Eigenschaften erzielen, ohne die Nachteile der bekannten, sehr ähnlichen Reaktivverdünner in Kauf nehmen zu müssen.

Gegenstand der Erfindung sind Einkomponenten-und Zweikomponentenklebstoffe die Verbindungen der Formel (I)

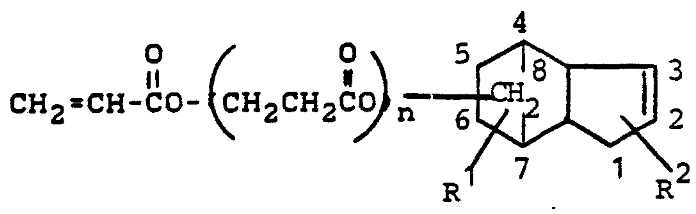
(I),

worin

$R^1$ und $R^2$ unabhängig voneinander ein Wasserstoffatom, eine $C_1$-$C_4$-Alkylgruppe, vorzugsweise Wasserstoff oder eine Methylgruppe bedeuten,

n für eine ganze Zahl von 1 bis 5, vorzugsweise von 1 bis 3, insbesondere für die Zahl 1 steht,

enthalten.

Die Verknüpfung der Estergruppe mit dem Dicyclopentadienylrest kann in Position 5 oder 6 erfolgt sein.

Die Synthese der Verbindungen der Formel (I) erfolgt über die oligomeren Acrylsäuren der Formel (II)

$CH_2=CH-COO-(CH_2CH_2COO)_nH$ ..(II),

in welcher

n die bei Formel (I) angegebene Bedeutung hat.

Oligomere Acrylsäuren lassen sich durch Erhitzen von Acrylsäure in Gegenwart von Polymerisationsinhibitoren herstellen (z.B. DE-OS 2 800 357).

Zur Herstellung des Esters (I) lassen sich oligomere Acrylsäuren in Gegenwart saurer Katalysatoren glatt an Dicylclopentadiene anlagern. Das Molverhältnis oligomere Acrylsäure/Dicyclopentadien im Reaktionsgemisch beträgt 1:1 bis 3:1, vorzugsweise 1,5:1 bis 2:1. Die Reaktionstemperatur beträgt 50 bis 150°C, vorzugsweise 60 bis 80°C.

Eine weitere Synthesemöglichkeit für den Ester (I) besteht darin, oligomere Acrylsäuren mit 5,6-Dihydrodicyclopentadienol der Formel (III)

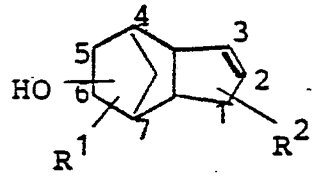

(III),

in welcher

$R_1$ und $R_2$ die bei Formel I angegebene Bedeutung haben, zu verestern. Der Alkohol (III) wird nach bekannten Verfahren durch sauer katalsierte Wasseranlagerung an Dicyclopentadien hergestellt.

Beide Verfahren zur Herstellung des Esters (I) sind z.B. in der EP-A-57 834 beschrieben.

Die erfindungsgemäßen Klebstoffe haben daher folgende Zusammensetzung:

Komponente 1

a) Reaktivverdünner der Formel (I),
b) Vernetzer, Verbindungen mit mehreren polymerisierbaren Doppelbindungen, z.B. Oligo(meth)acrylate,
c) Höhermolekulare Bestandteile, z.B. Thermoplaste, Elastomere,
d) Adhäsionsverbesserer,
e) eine oder mehrere Peroxidische Verbindung, die befähigt ist, eine radikalische Polymerisation auszulösen,
f) Katalysatoren (Beschleuniger),
g) Stabilisatoren,
h) Weitere Additive, z.B. Füllstoffe, Netzmittel, Thizotropie-Hilfsmittel,

Gegebenenfalls eine Komponente 2

Beschleuniger mit gegebenenfalls weiteren Bestandteilen aus Komponente 1, z.B. Komponenten a, b, c, d, f, g, h einzeln oder in Mischungen mit der Maßgabe, daß Komponente 2 flüssig ist. Zusätzlich kann Komponente 2 Hilfsstoffe wie Lösungsmittel, Filmbildner etc. enthalten.

Der Reaktivverdünner der Komponente 1 a) entspricht bevorzugt einem Dicyclopentadienolderivat der Formel (IV)

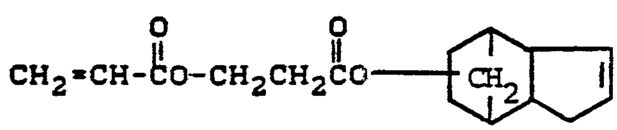

(IV).

Als Vernetzer b) können Verbindungen mit mehreren polymerisierbaren Gruppen, z.B. (Meth)acrylate basierend auf Diolen und Triolen, bevorzugt tetraethoxylierte Trismethylolpropan-tris-(meth)acrylate, verwendet werden.

Höhermolekulare Bestandteile c) können sein:

Poly(meth)acrylate, Polychloropren, chloriertes Polyethylen, chlorsulfonierte Polymere, z.B. chlorsulfoniertes Polyethylen, Acrylnitril-Butadienkautschuke, Styrol-Butadienkautschuke, Polybutadien, Ethylen-Vinylacetatpolymere, Polyvinylacetat, Polyester, Polyether, Polyurethane usw.

Als Adhäsionsverbesserer d) eignen sich z.B. übliche polymerisierbare Säuren wie (Meth)-acrylsäure, oligomere Acrylsäuren, polymerisierbare Isocyanate, Silane oder Phosphorsäureester.

Die peroxidische Verbindung e) kann abgeleitet sein von Kohlenwasserstoffen (z.B. mit 3 bis 18 C-Atomen). Geeignet sind z.B. handelsübliche Peroxide wie Dibenzoylperoxid, tert.-Butylbenzoat etc., geeignete Hydroperoxide sind Cumolhydroperoxid, tert.-Butylhydroperoxid. Die peroxidischen Verbindungen können allein oder in Kombination miteinander verwendet werden.

Als Beschleuniger f) sind übliche Verbindungen zu verstehen, die mit peroxidischen Verbindungen bei Raumtemperatur eine radikalische Polymerisation initiieren können. Geeignet sind z.B. aliphatische oder aromatische tert. Amine wie Triethylamin, Dimethylanilin etc., Sulfenamide, Sulfimide wie Saccharin.

Ist die peroxidische Verbindung und der Beschleuniger in derselben Klebstoffkomponente, sollte zur Erhaltung der Stabilität die Sauerstoffzufuhr zur Klebstoffkomponente gewährleistet sein. Die Beschleuniger können sowohl einzeln als auch in Kombination miteinander verwendet werden.

Als Stabilisatoren g) können übliche, aktiven Sauerstoff enthaltende Verbindungen wie Hydrochinon und dessen Derivate verwendet werden sowie Komplexbildner wie Ethylendiamintetraessigsäure - (EDTA).

Weitere Additive h) sind beispielsweise Füllstoffe, Kieselsäuren, Silicate, Titandioxid, Calciumcarbonate etc. und zusätzlich für spezielle Fälle Netzmittel, Farbstoffe etc.

Die unter Punkt f) aufgeführten Beschleuniger können gegebenenfalls Bestandteil einer 2. Klebstoffkomponente sein. Prinzipiell sind als Beschleuniger in einer 2. Komponente geeignet:

-Aliphatisch-aromatische tert. Amine, die gegebenenfalls substituiert sein können, z.B. Dimethylanilin, N,N-Bis-hydroxyethyl-toluidine, N,N-Bis-hydroxypropyltoluidine etc.

-Umsetzungsprodukte aus Aminen und Aldehyden, z.B. Umsetzungsprodukte aus Butylamin und Butyraldehyd oder aus Butyraldehyd und Anilin, beispielsweise Vulkazit 576® (Bayer AG). Weiterhin können Metallsikkative, z.B. lösliche Salze des Co, Ph, Mn, Zr, Ca, Fe wie 2-Ethylhexanoate oder Naphthenate verwendet werden. Die als Beschleuniger wirkenden Substanzen können sowohol einzeln als auch in Mischung miteinander verwendet werden.

Bevorzugte erfindungsgemäße Klebstoffe sind:

1. Flüssige, einkomponentige, anaerob härtende Reaktivklebstoffe folgender Zusammensetzung:

a) Reaktivverdünner der Formel (I),

b) 0 -40 Gew.-% Vernetzer,

c) 0 -50 Gew.-% höhermolekulare Bestandteile

d) 0 -20 Gew.-% Adhäsionsverbesserer,

e) 0,1 -20 Gew.-% Hydroperoxide,

f) 0 -5 Gew.-% Beschleuniger,

g) 0 -1 % aktiven Sauerstoff enthaltende Stabilisatoren,

h) 0 -50 Gew.-% weitere Additive.

Die Summe der unter c) und h) aufgeführten Bestandteile sollte 50 Gew.-% nicht überschreiten.

Gew.-% bezieht sich hier auf die Menge des eingesetzten Reaktivverdünners a).

Zur Verhinderung vorzeitiger Polymerisation sollte gewährleistet sein, daß diese Mischung immer einen genügend hohen Anteil gelösten Sauerstoffs enthält.

2. Flüssige zweikomponentige Reaktivklebstoffe bestehend aus:

Komponente 1

a) 20 -80 Gew.-Teile Reaktivverdünner der Formel (I),

b) 0 -20 Gew.-Teile Vernetzer,

c) 0 -70 Gew.-Teile höhermolekularer Bestandteile,

d) 0 -50 Gew.-Teile Adhäsionsverbesserer

e) 0,1 -10 Gew.-% Peroxide,

f) 0 -1 Gew.-% Imid (Co-Beschleuniger),

g) 0 -1 Gew.-% aktiver Sauerstoff enthaltende Stabilisatoren,

h) 0 -50 Gew.-Teile weitere Additive.

Komponente 2

Beschleuniger und gegebenenfalls Zusatzstoffe.

Die Angabe Gew.-% bezieht sich auf die Summe der Massen a, b, c, d und h.

Diese Klebstoffe können nach einem mix oder no-mix-Verfahren verwendet werden.

Wird ein mix-Verfahren verwendet, sollte die Mischung Peroxid-Beschleuniger Verhältnisse von 1:10 bis 99:1, insbesondere von 1:1 bis 90:10, aufweisen.

Die Herstellung der erfindungsgemäßen Klebstoffekann in üblichen Knet-oder Rührapparaturen, gegebenenfalls bei erhöhter Temperatur (max. 80°C) erfolgen. Wird bei erhöhter Temperatur gearbeitet, sollte, um eventuell mögliche vorzeitige Polymerisation zu verhindern, Luft durch das Mischgefäß geblasen werden.

Peroxidische Verbindungen sollten nur bei Raumtemperatur eingearbeitet werden.

Beispiel 1

Dieses Beispiel zeigt die Eigenschaften von Klebstofffilmen, die den erfindungsgemäßen Reaktivverdünner enthalten im Vergleich zu Klebstofffilmen, die 5,6-Dihydrodicyclopentadienyloxyethylmethacrylat (QM 657 Rohm und Haas Comp.) enthalten.

Dazu wurden in Rührapparaturen folgende Mischungen hergestellt:

a) 147 g Ester der dimeren Acrylsäure mit 5,6-Dicyclopentadinol

9 g tetraethoxyliertes Trismethylolpropantrisacrylat

7,5 g tert. Butylperbenzoat 0,8 g Saccharin

b) 190 g Acrylester des Hydracrylsäure-5,6-dihydrodicyclopentadienylesters

6,4 g tetraethoxyliertes Trismethylolpropantrisacrylat

2,5 g tert. Butylperbenzoat

0,3 g Saccharin

c) 147 g 5,6-Dihydrodicyclopentadienyloxyethylmethacrylat (QM 657 Rohm und Haas Comp.)

9 g tetramethoxyliertes Trismethylolpropantrisacrylat

7,5 g tert. Butylperbenzoat

0,8 g Saccharin

d) 190 g 5,6-Dihydrodicyclopentadienyloxyethylmethacrylat (QM 657 Rohm und Haas Comp.)

9 g tetraethoxyliertes Trismethylolpropantrisacrylat

5 g tert. Butylperbenzoat

0,6 g Saccharin

Diese Mischugnen wurden mit je 2 % Vulkazit 576® (Bayer) (Butyraldehyd/Anilin-Kondensat) abgemischt und in PTFE-Formen zu 1 mm starken Folien vergossen. Nach 72 Stunden wurden die Folien aus der Form genommen, nach weiteren 10 Tagen wurden entsprechend der DIN 53 504 S 3 Stäbe ausgestanzt, die Zugfestigkeit und die Bruchdehnung bestimmt:

| Folie | Zugfestigkeit | Bruchdehnung |
|---|---|---|
| | MPa | % |
| a | 4,8 | 74 |
| b | 2,6 | 91 |

Diese Bestimmung konnte bei den Folien c und d nicht vorgenommen werden, da sie so stark versprödet waren, daß sie beim Versuch Normstäbe auszustanzen zerbrachen.

Beispiel 2

Vergleich der Reaktivverdünner der Formel (V)

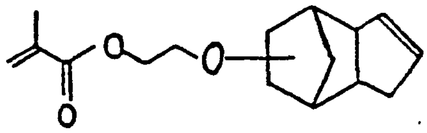

(V)

Rohm und Haas QM 657®
(Dihydrodicyclopentadienyloxyethylmetharylat)

und

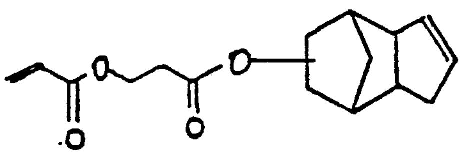

(IV)

Reaktiverdünner der Formel IV (Ester der dimeren Acrylsäure mit 5,6-Dihydrodicylopentadienol)

in einem 2-komponentigen Klebstoffsystem.

In einer Rührapparatur wurde unter Durchleiten von Luft bei 70°C eine homogene Mischung hergestellt aus:

10 g Ethylen-Vinylacetat-Copolymer (Levapren 450® Bayer)

35 g Reaktivverdünner

1,4 g tetraethoxliertes Trismethylolpropantrisacrylat

Aus dieser Mischung wurden bei Raumtemperatur Klebstoffkomponenten 1 hergestellt durch Zusatz von:

a) 2 % Benzoylperoxid

b) 2 % Benzoylperoxid, 9 % Methacrylsäure

c) 2 % tert. Butylperbenzoat, 0,75 % Saccharin

d) 2 % tert. Butylperbenzoat, 0,75 % Saccharin, 9 % Methacrylsäure.

Komponente 2:

Für die Abmischungen a und b: 3 Teile Dimethylanilin

1 Teil N,N-Bishydroxyethyl-p-toluidin

für die Abmischungen c und d: Vulkazit 576® - (Bayer AG)

(Butyraldehyd/Anilin-Kondensat)

Zur Verklebung wurden Komponente 1 und Komponente 2 auf jeweils einen Prüfkörper aufgetragen. Danach wurde so zusammengefügt, daß die überlappte Fläche 20 x 10 mm betrug. Als Prüfkörper dienten Leguval-Streifen (GF-UP, sheet moulded compounds) der Abmessung 20 x 40 x 4 mm im folgenden mit SMC abgekürzt. Es handelt sich hierbei um eine low profile-Qualität mit 30 % Glasanteil und 4,5 % Zn-Stearat als Formentrennmittel. Als zweites Testmaterial wurden Eisenprüfkörper (Tiefziehblech 1303) der Abmessung 20 x 40 x 2 mm verwendet. Dieses Material wird im folgenden mit Eisen abgekürzt. Die Eisenprüfkörper wurden vor der Verklebung mit Methylenchlorid entfettet.

Zur Feststellung der Handfestigkeit wurde die Zeit ermittelt, ab welcher die verklebten Teile nicht mehr durch Fingerdruck aus Daumen und Zeigefinger einer Hand gegeneinander verschiebbar sind. Zur Feststellung der Endfestigkeit belastet man die zusammengefügten Prüfkörper mit einem Gewicht von 1 kg 2 Stunden lang und beläßt danach 12 Stunden bei Raumtemperatur. Als Endfestigkeit wurde die Zug-Scher-Festigkeit nach DIN 53 283 festgestellt.

Handfestigkeiten:

| Klebstoff | Reaktivverdünner V SMC | Reaktivverdünner V Eisen | Reaktivverdünner IV SMC | Reaktivverdünner IV Eisen |
|---|---|---|---|---|
| a | 3 min | 3 min | 4 min | 3 min |
| b | 40 sec | 40 sec | 2 min | 1 min |
| c | 15 min | 15 min | 15 min | 15 min |
| d | 10 min | 4 min | 10 min | 6 min |

| Klebstoff | Reaktivverdünner V SMC ($N/mm^2$) | Reaktivverdünner V Eisen ($N/mm^2$) | Reaktivverdünner IV SMC ($N/mm^2$) | Reaktivverdünner IV Eisen ($N/mm^2$) |
|---|---|---|---|---|
| a | 1,3 | 2,6 | 2,7 | 6,8 |
| b | 1,6 | 5,5 | 2,0 | 7,4 |
| c | 0,9 | 4,8 | 4,8 | 7,5 |
| d | 0,7 | 5,9 | 4,1 | 9,2 |

Der Vergleich zeigt, daß bei unwesentlich verändertem Abbindeverhalten mit dem erfindungsgemäßen Reaktivverdünner deutlich bessere Klebfestigkeiten erhalten werden.

Beispiel 3

Mit diesem Beispiel werden die verschiedenen Formulierungsmöglichkeiten 2-komponentiger Acrylatklebstoffe gezeigt.

In einer Rührapparatur wurde unter Durchleiten von Luft bei 70°C eine homogene Mischung hergestellt aus:

10 g Ethylen-Vinylacetat-Copolymer (Bayer Levapren 700®)

35 g Ester der dimeren Acrylsäure mit 5,6-Dihydrodicyclopentadienol

1,4 g tetraethoxyliertes Trimethylolpropantrisacrylat.

Aus dieser Mischung wurden bei Raumtemperatur Klebstoffkomponenten 1 und 2 heregestellt.

Klebstoffkomponente 1 durch Zusatz von:

a) 2 % tert. Butylperbenzoat, 0,75 % Saccharin

b) 2 % tert. Butylperbenzoat, 0,75 % Saccharin, 9 % Methacrylsäure

c) 2 % tert. Butylperbenzoat, 0,75 % Saccharin, 30 % Hydroxyethylmethacrylat,

d) 2 % tert. Butylperbenzoat, 0,75 % Saccharin, 30 % Hydroxyethylmethacrylat,

e) 2 % Benzoylperoxid

Klebstoffkomponente 2 durch Zusatz von:

f) 2 % Bayer Vulkazit 576®

g) 4 % Bayer Vulkazit 576®

Diese Komponenten wurden wie in Beispiel 2 beschrieben, im no mix-Verfahren wie folgt verklebt und getestet:

**Endfestigkeiten:**

| Komponente 1 | | Komponente 2 | SMC (N/mm²) | Eisen (N/mm²) |
|---|---|---|---|---|
| Abmischung | a | Vulkazit 576 | 1,9 | 12,7 |
| " | b | " | 1,3 | 14,1 |
| " | c | " | 4,9 | 12,8 |
| " | d | " | 7,1 | 13,0 |
| " | c | Abmischung f | 1,0 | 10,1 |
| " | c | Abmischung g | 3,0 | 12,6 |
| " | e | 3 Teile Dimethylanilin 1 Teil N,N-Bishydroxyethyl-p-Toluidin | 3,2 | 12,8 |

Beispiel 4

Dieses Beispiel zeigt die Verträglichkeit der erfindungsgemäßen Reaktivverdünner mit weiteren für Klebstoffe geeigneten Polymerkomponeten.

In einer Rührapparatur wird bei Raumtemperatur eine homogene Mischung hergestellt aus:

21,6 g Acrylnitril-Butadien-Kautschuk (Bayer Perbunan N 3302NS9®)

75,4 g Ester der dimeren Acrylsäure mit 5,6-Dihydrodicyclopentadienol

3 g tetraethoxyliertes Trismethylolpropantrisacrylat

Aus dieser Mischung werden Klebstoffkomponenten 1 hergestellt durch Zusatz von:

a) 2 % Benzoylperoxid, 9 % Methacrylsäure

b) 2 % Butylperbenzoat, 0,75 % Saccharin, 9 % Methacrylsäure

Komponente 2:

für die Abmischung a: 3 Teile Dimethylanilin

1 Teil N,N-Bishydroxyethyl-p-toluidin

für die Abmischung b: Vulkazit 576® (Bayer AG) (Butyraldehyd/Anilinkondensat)

**Handfestigkeiten:**

| | SMC min | Eisen min |
|---|---|---|
| a) | 5 | 2 |
| b) | 10 | 10 |

| Endfestigkeiten | SMC N/mm² | Eisen N/mm² |
|---|---|---|
| a) | 4,0 | 7,8 |
| b) | 2,4 | 10,0 |

Beispiel 5

Dieses Beispiel zeigt die Vertäglichkeit der erfindungsgemäßen Reaktivverdünner mit weiteren für Klebstoffe geeingneten Komponenten.

In einer Knetapparatur mit o-Knethaken wird eine homogene Mischung hergestellt aus:

30 g chlorsulfoniertem Polyethylen (Hypalon 20,® DuPont)

110 g Ester der dimeren Acrylsäure mit 5,6-dihydrodicyclopentadienol

6,7 g tetraethoxyliertem Trimethylolpropantrisacrylat

Aus dieser Mischugn werden Klebstoffkomponenten 1 hergestellt durch Zusatz von:

a) 2 % Benzoylperoxid

b) 2 % Benzoylperoxid, 9 % Glycidylmethacrylat

c) 2 % Benzoylperoxid, 9 % Isocyanatoethylmethacrylat

d) 2 % tert. Butylperbenzoat, 0,75 % Saccharin

e) 2 % tert. Butylperbenzoat, 0,75 % Saccharin, 9 % Glycidylmethacrylat

f) 2 % tert. Butylperbenzoat, 0,75 % Saccharin, 9 % Isocyanatoethylmethacrylat

Als Komponenten 2 wird für die Klebstoffmischungen a -c eine Mischung von 3 Teie Dimethylanilin und 1 Teil N,N-Bishydroxyethyl-p-toluidin verwendet. Für die Klebstoffmischungen d -f wird als Komponente 2 Vulkazit 576® (Bayer) (Anilin-Butyraldehyd-Kondensationsprodukt) verwendet.

| Handfestigkeiten: | SMC | Eisen |
|---|---|---|
| a) | 45 sec | 45 sec |
| b) | 1 min | 1 min |
| c) | 45 sec | 45 sec |
| d) | 10 min | 10 min |
| e) | 4 min | 9 min |
| f) | 8 min | 10 min |

| Endfestigkeiten: | SMC ($N/mm^2$) | Eisen ($N/mm^2$) |
|---|---|---|
| a) | 3,6 | 6,4 |
| b) | 5,4 | 7,2 |
| c) | 3,7 | 13,9 |
| d) | 3,8 | 6,8 |
| e) | 4,0 | 11,1 |
| f) | 4,1 | 14,7 |

Beispiel 6

In einer Rührapparatur wird unter Durchleiten von Luft ein einkomponentiger Klebstoff hergestellt aus:

75 g Acrylester des Hydracrylsäure-5,6-dihydrodicyclopentadienylesters

2 g Cumolhydroperoxid

0,3 g Saccharin

15 g tetraethoxyliertes Trismethylolpropantrisacrylat

10 g Methacrylsäure

M-8 Messingschrauben und Muttern wurden in Methylenchlorid gereinigt. Danach wurde die Klebstoffmischung auf das Schraubgewinde aufgetragen und die Muttern aufgedreht. Nach 24-stündiger Lagerung bei Raumtemperatur wurde mittels eines Drehmonomentschlüssels die Drehkraft in Nm bestimmt, die zum Aufdrehen der Klebung benötigt wird ("Losdrehmoment"), sie betrug 15 Nm.

**Ansprüche**

1. Einkomponenten-und Zweikomponentenklebstoffe die Verbindungen der Formel (I)

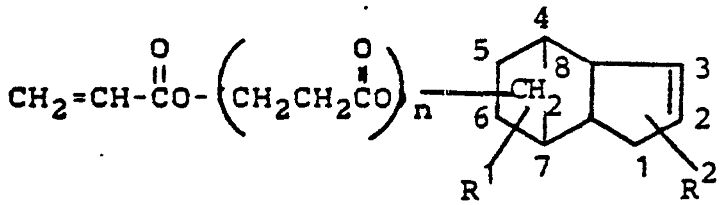

(I),

in welcher

$R^1$ und $R^2$ unabhängig voneinander ein Wasserstoff-atom, eine $C_1$-$C_4$-Alkylgruppe bedeuten,

n für eine ganze Zahl von 1 bis 5 steht,

enthalten/

2. Flüssige, einkomponentige, anaerob härtende Reaktivklebstoffe folgender Zusammensetzung:

a) Reaktivverdünner der Formel (I),
b) 0 -40 Gew.-% Vernetzer,
c) 0 -50 Gew.-% höhermolekulare Bestandteile
d) 0 -20 Gew.-% Adhäsionsverbesserer,
e) 0,1 -20 Gew.-% Hydroperoxide,
f) 0 -5 Gew.-% Beschleuniger,
g) 0 - 1 % aktiven Sauerstoff enthaltende Stabilisatoren,
h) 0 -50 Gew.-% weitere Additive.

3. Flüssige zweikomponentige Reaktivklebstoffe bestehend aus:

Komponente 1

a) 20 -80 Gew.-Teile Reaktivverdünner der Formel (I),

b) 0 -20 Gew.-Teile Vernetzer

c) 0 -70 Gew.-Teile höhermolekularer Bestandteile

d) 0 -50 Gew.-Teile Adhäsionsverbessere e) 0,1 - 10 Gew.-% Peroxide

f) 0 -1 Gew.-% Imid (Co-Beschleuniger)

g) 0 -1 Gew.-% aktiver Sauerstoff enthaltende Stabilisatoren

h) 0 -50 Gew.-Teile weitere Additive und als

Komponente 2

Beschleunigern und gegebenenfalls Zusatzstoffen.

4. Klebstoff nach Anspruch 1, dadurch gekennzeichnet, daß als Reaktivverdünner ein Dicyclopentadienolderivat der Formel (IV)

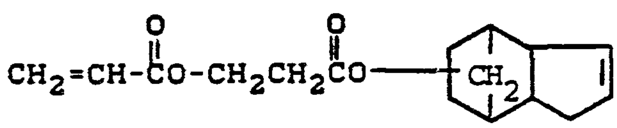

(IV),

verwendet wird.